# EUROPEAN PATENT SPECIFICATION

(11) **EP 0 418 239 B1**
(45) Date of publication and mention of the grant of the patent: **07.01.1993**
(21) Application number: 88908767.2
(22) Date of filing: 21.09.1988
(51) Int. Cl.: F01D 7/00, F03D 3/06

(54) **FLOW MACHINE**
DURCHFLUSSVORRICHTUNG
MACHINE D'ECOULEMENT

(30) Priority: 25.09.1987 SE 8703294
(43) Date of publication of application: 27.03.1991
(73) Proprietor: JONSSON PUMPKONSULT, S-683 00 Hagfors (SE)
(72) Inventor: JONSSON, Arne Fredrik, S-683 00 Hagfors (SE)
(74) Representative: Klauber, Tomas
(86) International application number: PCT/SE88/00489
(87) International publication number: WO 89/02974

(56) References cited:
- EP-A- 0 046 122
- WO-A-84/01406
- WO-A-84/02751
- FR-A- 0 604 390

## Description

The present invention relates to a flow machine, and more particularly to a device for attachement therein of a blade element which has a non-neglectable thickness, e.g. a blade with a drip-shaped profile (like an aeroplane wing), and in particular a blade which in operation is adjustable as to its inclination. The term "blade" is meant to comprise, in the present description, each structur member, movable or not, which irrespective of its actual function has the general shape of a blade of the above described kind.

In flow machines the blade attachement is of great importance for the performance of the machine, primarily due to its influence on flew losses and on the structural strength of the machine with attendant possibilities of operation at high speeds, and with respect to the general safety of the machine (e.g. a risk for the blade to turn loose and be thrown out of the machine). For axial machines with radial, non-adjustable blades, such as steam turbines or the like, solutions are known, among them a so called fur top attachement, which due to a form-locking meet highly put operational demands. Also for water turbines of the Kaplan-type are operative solutions for the attachement of adjustable blades known. The known solutions concern machines in which the blade attachement is located outside the area where the medium flows by which the actual blade is driven, or which itself is driven by the respective blade. However, if a blade, because of the general conception of the machine, has to be attached within the said flow area, considerable design problems arise, in particular with respect to unduely high flow losses. The invention is particularly concerned with the last mentioned instance.

In machines through which the medium flows in a direction transversely to the rotational axis of the machine (so called transverse flew machines), the blade attachement has a specially great importance when the machine is comparatively sparsely equipped with blades. Thus, already in the French patent Nr. 604.390, relating to a so called Darrius-rotor, the importance of an (undisturbed) stream line shape for the blades has been mentioned. In transverse flow machines it is typical for the rotor blades to be during rotation subjected to a varying load, which results in a certain fatigue effect. In transverse flow machines for liquids, the structural strength of the blade attachement becomes critical for the entire construction, due to the comparatively high density of the liquid. In particular in water turbines it is important that the blade attachement be not dimensioned only with respect to the normal operational speed, but it must be dimensioned for the racing speed (i.e. the speed which the turbine attains when the braking moment of e.g. a generator ceases). In water turbines, the race speed is of the order of twice the operational speed. The centrifugal forces which have to be taken into consideration when the dimensions are determined are then about four times greater than those in the operational state. In machines with blades which are adjustable in operation, as described in WO-A- 84/01406,the blade attachement embodies at the same time the pivot element for the adjustment movement of the blade. To minimize wear, sufficient dimensioning of the pivot element, as well as a suitable sealing thereof against polluting agents which may be carried by the medium, is necessary.

According to the present invention there is provided a blade attachement which does not or, at most, only minimally affect the flow, which has a high structural strengt and, at the same time, a secure design. The fatigue strength may be made very high, due to a low notch fatigue factor. In adjustable blades, the pivot element or pivot point may be located optimally relative to the force centre, as well in the chord direction of the blade, as transversely thereto.

The invention is characterized by the features that are evident from the accompanying claims. According to the invention, the attachement point of a blade is located inside the cross-sectional face of the blade. This localization results in that any type of gondola-like additional structures for the blade attachement, as has been the practice hitherto, is entirely dispensed with. In flow machines for liquids such gondolas may have an extent of more than 20% of the blade length, and, depending on the dimensioning forces, the occurence of gondolas may result in a decrease of the performance of more than 30%.

The invention will now be explained more in detail with reference to the accompanying diagrammatical drawings, which relate to exemplary embodiments, and in which
Fig. 1 is a perspective view of a rotor according to the present invention for a flow machine which otherwise is not shown,
Fig. 2 shows the cross-section II in Fig. 1 at a larger scale;
Fig. 3 shows the same cross-sectinal area, prior to the assembly;
Fig. 4 is a plan view of the area around the support arm 9 as seen in the direction of the arrow IV in Fig. 1 ;
Figs. 5A and 5B are longitudinal sections along the plane V-V in Fig. 4 through two alternative embodiments;
Fig. 5C illustrates a cutter for producing the recess according to Fig. 3;
Fig. 6 is a cross-section along the plane VI-VI in Fig. 5B;
Fig. 7 is a cross-section along the plane VII-VII in Fig. 5B;
Fig. 8 is a plan view, in analogy to Fig. 4, of an alternative embodiment;
Fig. 9 is a plan view, and Fig. 10 a side view of the pivot member of Fig. 8;
Fig. 11 is a cross-section, in analogy to Fig. 2, through another alternative embodiment, and
Fig. 12A, 12B, 12C are corresponding cross-sections through three other alternative embodiments.

Identical or analogous parts are provided with identical or analogous reference characters in all figures of the drawings.

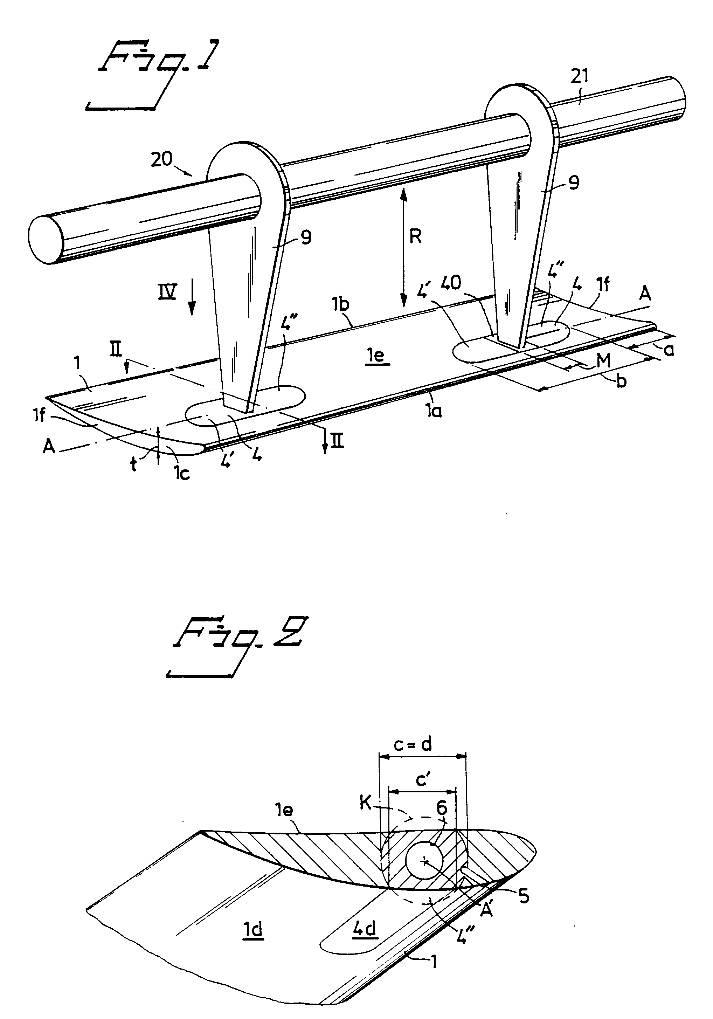

A flow machine, not shown more in detail, has according to Figs. 1 - 7 a rotor 20 which comprises a shaft 21 to which a rotor blade 1 is attached by means of two support members (support arms) 9. For lucidity a rotor with one blade only is shown, whereas in practice, of course, a greater number of blades may be provided.

In the following, the directions parallel to the shaft 21 are denoted as axial, and the directions parallel to the support arms 9 are denoted as radial. The rotor blade 1 is elongated an extends axialy while it is supported by the support arms 9 at a radial distance R from the shaft 21. Also the number of arms 9 may vary, and may be as well one as more than two.

The arms 9 are non-rotatably attached to the shaft 21, whereas the blade 1 is so connected to the arms 9, in a manner which will be desclosed more in detail below, as to be pivotable about an axis A-A. The inclinaison of the blade relative to the support arms 9 may be adjusted by means of a not shown adjustment device of any known kind, and the blade may be locked - if desired, also in operation, i.e. during rotation of the rotor - in a selected position.

The blade 1 has, at least in a part of its profile, a non-neglectable thickness t in that it prosesses a drip-shaped profile like an aeroplane wing. The blade 1 is limited by two end faces 1f, and by an outer (relative to the shaft 21) envelope face 1d and an inner (relative to the shaft 21) envelope face 1e. Both of these envelope faces extend from the leading edge 1a of the blade and meet or intersect one another at the rear edge 1b of the blade.

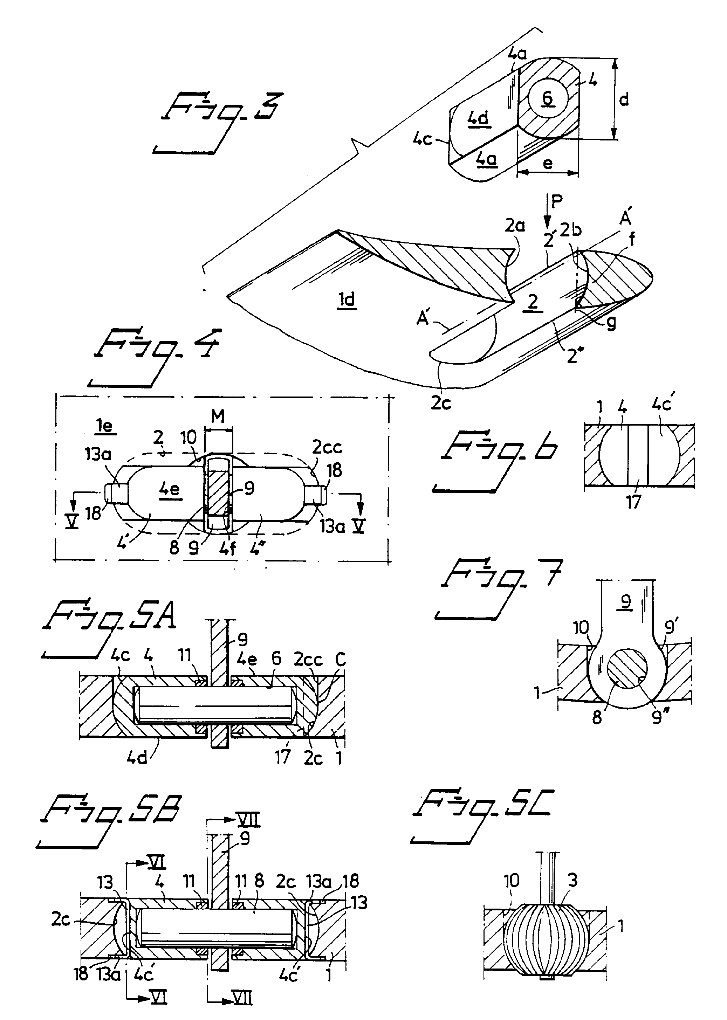

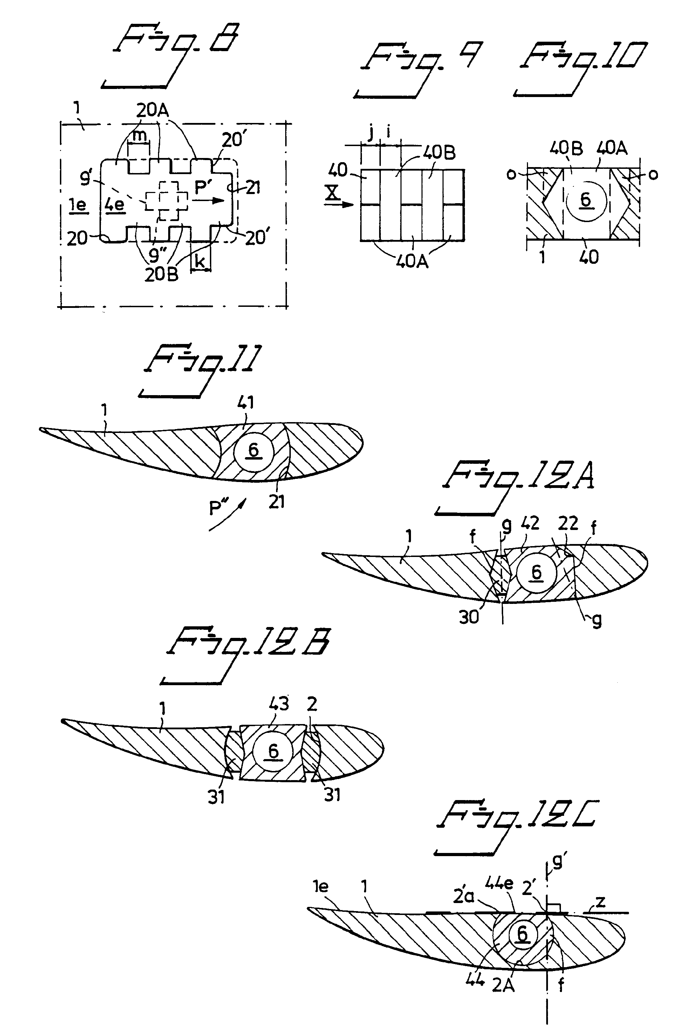

In the thickest portion 1c of the blade 1, and at a selected distance a from each one of the end faces 1f, is an axially extending elongated recess 2 (Fig. 3) is provided, which is limited by two side walls 2a, 2b. The recess 2 has a selected length b, and the side walls 2a, 2b have, in the embodiment shown, the shape of cylindrical surfaces, more correctly partial cylindrical surfaces pertaining to a common cylindrical surface k with an axis A′-A′ wich may coincide with the above said axis A-A. The side walls 2a, 2b may be provided e.g. in such a manner that a cutter 3 (Fig. 5C), having a spherical or toroidal cutting face, is introduced into the blade 1 through an inlet opening 10 (Figs. 4 and 7), and is then moved essentially a distance 0,5b in either direction. Thus, the recess 2 will be terminated by two end faces 2c (Fig. 5B) in the shape of concave spherical faces (for lucidity, the inlet opening 10 is not shown in Fig. 1).

In each one of the recesses 2 is an insert or pivot member 4 provided which, in the embodiment according to Figs. 1 - 7, is embodied by two halves 4′ and 4˝ which are separated by a gap M, and which are non-rotatably or pivotally interconnected by means of a pivot pin 8 (Figs 4, 5, 7).

Each one of the two halves 4′, 4˝ of the insert member is limited by two side faces 4a, 4b, two outer limiting faces 4d, 4e, one outer end face 4c, and one inner end face 4f. The side faces 4a, 4b have a convex cylindrical shape with the same radius and the same axis A′-A′ as the side walls 2a, 2b of the recesses 2, and, thus they are located at the same mutual distance d as what the mutual distance c between the side walls 2a, 2b is.

The outer limitating faces 4d, 4e have the same shape as the surrounding portions of the outer envelope surfaces 1d, 1e of the blade 1, and they are also located at the same mutual distance e (FIG. 3) as these. The distance e is smaller than the smallest distance c′ (Fig. 2) between the side walls 2a, 2b. The outer end faces 4c may either have the shape of a convex sperical surface with the same radius as that of the end faces 2c of the recess 2, and be located at the same mutual distance b (FIG. ) as these, or they may, in an alternative embodiment 2c′ according to Fig. 5B, be flat. The inner end faces 4f are flat (Fig. 4).

Inside each half 4′, 4˝ of the pivot member there is provided an axially extending bore 6 for non-rotatably receiving of the pivot pin 8. In the gap M between the two halves 4′, 4˝ is the support arm 9, which at its end is provided with an opening 9˝ (Fig. 7) in an eye 9′ (Fig. 7), pivotally mounted on the pivot pin 8. Alternatively, and advantageously, the support arm 9 may be non-rotatably secured to a pivotally journalled pivot pin 8.

The pivot member 4 is introduced into the recess 2 in such a manner that it is first turned into a position according to Fig. 3, wherein the outer limiting faces 4d, 4e extend essentially perpendicularly to the envelope faces 1d, 1e of the blade. Then, the pivot member 4 is pushed in the direction of the arrow P into the recess 2, and finally it is turned approximately 90° to the position according to Fig. 2, in which its outer limiting faces 4d, 4e, due to their above described design and, due to the fact that their mutual distance e (Fig. 3) is the same as the thickness of the blade 1 in the respective area, "merge" with the envelope faces 1d, 1e of the blade. The pivot member 4 is in this position retained either solely by friction (if a sutiable degree of fitting is selected), or by means of a special locking element, such as the locking plate which will be described below. It should be noted that a rotor blade of the kind in question in operation is not subjected to any noticeable torque about the axis A-A.

The insert or pivot member 4 which in this way has been moved into its final position is retained within the recess 2 by a form-bound engagement of its side surfaces 4a, 4b with the side walls 2a, 2b of the recess. To achieve this locking effect, it is required in principle that at least one of the side walls 2a, 2b has a profile shape where an area f between its end edges 2′, 2˝ (Fig. 3) is more spaced from the opposite side wall than is a straight connecting line g between these two end edges, and that the side face of the insert member, located adjacent to this side wall, is designed for a direct form-bound engagement with the side wall, or a form-bound engagement with an inserted locking element, which in its turn is in form-bound engagement with the side wall. The last mentioned alternative will be disclosed mere in detail in connection with Figs. 12A and 12B, from which it will also be evident that a cylindrical, or in general "round", shape is not the only answer to the above said requisite.

When the end faces 2c of the recess are shaped as a concave sperical surface, and the end faces 4c of the insert member 4 are given a corresponding convex shape, then the measure must be taken that the concave spherical surfaces 2c are in one direction, i.e. towards on of the envelope faces 1e, 1d, cut away into flat surfaces or, at least, into a concave cylindrical surface 2cc having at least the same radius as the remaining portion of the spherical surface, in order to allow insertion of the insert member 4 into the recess 2 (Figs. 4 and 5A).

The just mentioned measure will not be necessary if the end faces 4c′ (Fig. 5B) of the insert member 4 are made flat. To lock hte insert member against turning out of the end position, and also to achieve a good stabilization of the insert member 4 in axial direction, locking plates 13 are pushed in along the flat faces 4c, or in straight slots 17 proided in these end surfaces 4c′. The locking plates 13 have deflected end portions 13a which are recessed into the envelope faces 1d, 1e by resting in slots 18 in these envelope faces. At least one end portion 13a of a locking plate 13 is deflected at first after the plate has been inserted into its place.

Similar locking plates may also be utilized with insert members 4 having spherical end faces 4c, if straight slots 17 are provided also in these end faces, the bottom 17′ of which slots then forms a chord to the arc C which, in an axial section, limits the convex end faces, as is shown by a dashed line in Fig. 5A. Due to the shape of the recess 2 having a radius which is big relative to the dimensions of the blade 1, a high degree of fatigue strength is achieved.

Seals 11 for the pivot pin 8 are provided in the inner end faces 4f of the insert member 4.

Fig. 8 illustrates the same area as Fig. 4 when a modified insert member 40 according to Fig. 9 and 10 is used. This insert member 40 is introduced into its recess 20 in the same direction as according to Fig. 3, and is then locked by means of a short, straight-lined displacement relative to the blade 1. The pivot or insert member 40 consists in the example shown of three zones 40A with hexagonal cross-section, which alternate with two zones 40B with rectangular cross-section. The zones 40B limited by straight side walls are narrower than the broader zones 40A, in which the periphery of the side walls projects beyond the periphery of the side walls of the narrower zones, as will be best seen from Fig. 10.

The recess 20 has, in at least one of the envelope faces 1d, 1e, such an opening 21, limited by end edges 20′, which comprises alternating narrower zones 20B, the width of which corresponds to the width of the narrower zones 40B of the insert member, and broader zones 20A, the width of which corresponds to the maximum width of the wider zones 40A of the insert member.

The narrower zones 20B of the insert member 20 have a selected length i and the broader zones 20A have a selected lenght j, whereby both lengths conveniently may be the same. The broader zones 20A of the opening 21 have a length k which is at least equal to the length j, and the narrower zones 20B thereof have a lengt m which is equal to the length i. The recess 20 has along its entire extent, such a profile, visible in Fig. 10, which allows accomodation of of the wider zones 40A of the insert member. The zones 20A of the insert member 20 have been provided by removing there the portions o, limited by dashed lines in Fig. 10.

The insert member 40 is introduced into the recess 20 with a similar straight-lined movement as in Fig. 3, and more precisely in a position in which its zones 40A and 40B fit into the recess via thezones 20A and 20B, where-upon the insert member 40 is displaced axially in the direction of the arrow P′ a distance corresponding to the distance m, untill the zones 40A of the inert member are situated in the zones 20B of the recess and are retained there by a form-bound engagement between the respective hexagonal contours abutting one with another. Then, the insert member is, by a suitable locking element, not shown, locked against undesired axial displacement back into its position of insertion.

It is evident from the drawings that the exact shape of the side walls of the broader zones may be selected within wide limits, the illustrated hexagonal shape being an example only. These side walls may, for example, very well be convex cylindrical, as is shown in e.g. Fig. 3, and the side walls of the recess 20 may be concave cylindrical.

The support arm 9 may be secured to the insert member 40 in the same manner as in Figs, 1 - 7, e.g. in that the insert member 40 as shown definies one of two identical halves which are united by means of a pivot pin introduced into the bore 6, or, with non-adjustable blades, the support arm 9 may be welded to the surface 1e, as indicated at 9′. It should be noted that in the last mentioned instance the recess 20 and the insert member 40 may also extend perpendicularly to the longitudinal direction of the blade 1, viz. in the direction of the cross-section II in Fig. 1, as shown at 9˝. Of course, the bore 6 is omitted if the support arm 9 is welded in place.

In Fig. 11 there is shown an insert member 41 in a recess 21, which both are limited by cylindrical side walls or faces which are arcuated in the same direction and which have two different radii. If these radii extend from the same axis (which is now situated outside the recess 21), i.e. if all cylindrical surfaces are concentric, then the insert member 41 may be inserted into the recess 21 in a similar manner as in Fig. 3, and more precisely by a movement along an arcuate path in the direction of the arrow P˝. If the cylindrical surfaces are not concentric, e.g. when they all have the same radius, then the recess 21 must issue from the end face 1f of the blade 1 (Fig. 1), (i.e. the distance a becomes zero), and the insert member 41 is inserted into the recess 21 by an axial movement, which is then considerably longer than was the case according to Fig. 8.

In Figs 12A and 12B, finally, are shown embodiments with one or two locking elements 30 and 31, inserted between the insert member 42 and 43, respectively, and the recess 22 and 2, respectively. These locking elements have side faces with the same shape as, on the one hand, the adjacent side walls of the recess 22 and 2, respectively, and, on the other hand, as the adjacent site faces of the insert member 42 and 43, respectively. It should be noted that also with all the illustrated shapes of these side faces, the above mentioned requisite concerning the line g and the area f is met.

In Fig. 12C is an exemplary embodiment shown wherein the recess 2a does not occupy the full thickness of the blade 1 so that it penetrates only one envelope face 1e of the blade 1 with only two end edges 2′, 2′a. Also in this instance at least one of the side walls of the recess has to be undercut (in the example shown, both side walls are undercut) and then the requisite may be formulated so, that one area fhas to be located further away from the opposite side wall, than does a straight line g′ which at the respective end edge 2′ at right angles intersects a connection line z between the two existing end edges 2′, 2′a (i.e. which in practice defines a tangent to the respective envelope face 1e). Thus, the undercut may generally be defined in such a manner that there exists an area f, spaced from an adjacent end edge, which is situated further from the oppositely located side wall than a reference line g, g′ which passes through the respective end edge 2′ (the reference line in the recesses that penetrate both envelope surface being a connecting line g to the other end edge of the same side wall, and in recesses that penetrate only one envelope face, being a normal to the connecting line to the other end edge of the recess).

The insert member 44 has, of course, also in the embodiment according to Fig. 12C the same shape as the recess 2A, and exhibits only one outer limiting face 44e.

As a rule, the embodiments according to Figs. 12A-12C require that the recesses 2, 2A, 22 start from the end face 1f of the blade, the elements 30, 31 being conveniently dimensioned so that they in their final position exert a wedge action, and thus lock the insert member in the respective recess.

## Claims

1. A device for attachment in a flow machine, by means of at least one support member (9), of a blade-shaped element, such as a rotor blade (1), which is limited by two envelope faces (1d, 1e) and two end faces (1f), and which has, in at least one portion of its profile, an area (1c) with a non-negligeable thickness (t), characterized in that there is in the blade element, at an attachement point and within the said area, provided a recess (2, 20, 21, 22) which is limited by two side walls (2a, 2b) which along two end edges (2′, 2˝, 2′a, 20′) intersect at least one of the two envelope faces, and by at least one end face (2c, 2cc) which connects the two side walls with each other, at least one of said side walls being undercut in that it has, spacedly from its end edge, an area (f) that is located further away from the opposite side wall than is a straight reference line (g, g′) which passes through the said end edge, and in that a pivot or insert member (4, 40 - 44) is provided which is limited by two side faces (4a, 4b), at least one outer limiting face (4d, 4e) and two end faces (4c), and which insert member is insertable into the recess up to a final position in which it is locked against withdrawal from the recess by a force acting perpendicularly to the said envelope faces, due to a form-bound engagement effect, caused by said undercut, relative to the opposing side face of the insert member, where appropriate via an inserted locking element (30, 31) having a profil shape which establishes a form-bound engagement with the adjacent side wall and side face, the outer limiting face or faces of the insert member having such a shape, and being located in such a manner, that they, in the final position of the insert member, at least approximately form a continuation of the surrounding envelope face, and that the support member is connectable to the insert member.

2. A device as claimed in claim 1, characterized in that the side walls of the recess intersect both envelope faces, and that the said reference line (g) is a straight connection line between the end edges of the respective side wall at the two envelope faces.

3. A device as claimed in claim 1, characterized in that the maximum depth of the recess is smaller than the thickness of the blade element in the respective area, so that the recess (44) intersects along two end edges (2′, 2′a) only one envelope face, and that the said reference line is a normal which, at the respective end edge, intersects a connection line (z) to the other end edge.

4. A device as claimed in one or more of the preceding claims, characterized in that the side walls and the side faces have mutually corresponding cylindrical shapes, and in that one of the side walls is concave, and the side face, which in the final position of the insert is adjacent thereto, is convex.

5. A device as claimed in one or more of the preceding claims, characterized in that the at least one end surface has at least in part a concave spherical shape, and that the possibly remaining part has concave cylindrical shape with the same radius.

6. A device as claimed in one or more of the preceding claims, characterized in that the insert member comprises two halves (4′, 4˝) which are spacedly (M) inter-connected by means of a pivot pin, and that the support member is pivotally connected to the pivot pin in said space.

7. A device as claimed in one or more of the preceding claims, characterized in that the pivot pin is sealed off in the two halves by means of seals (11) in the inner faces (4f) of the two halves.

8. A device as claimed in one or more of the preceding claims, characterized in that the smallest mutual distance (c′) between the side walls of the recess is greater than is the mutual distance (e) between the outer faces of the insert member, so that the insert member may be inserted into the recess in a direction at right angles to the said envelope faces, and then by a turn of about 90°C may be brought into its final position.

9. A device as claimed in one or more of the preceding claims, characterized in that the insert member is locked in its final position by means of at least one locking plate (13) arranged at at least one end thereof, and which locking plate is inserted into a slot (17) in the end face of the insert member and has end portions (13a) which are deflected in the direction of the envelope faces, and preferably are recessed into the envelope faces.

10. A device as claimed in claim 1, characterized in that the insert member has a plurality of narrower zones (40B) with a predetermined length and straight side faces, which zones alternate with broader zones (40A) with side faces which have a periphery projecting beyond the periphery of the straight side faces, and in that the recess (20) along its entire extent has a profile that allows accomodation of the broader zones, the opening limited by the end edges (20′) of the recess exhibiting at at least one of the envelope surfaces alternating broader and narrower zones (20A, 20B), of which the broader zones allow passage to the broader zones of the insert member and are provided in the same number as these, whereas the narrower zones allow passage only to the narrower zones of the recess, and are provided in a corresponding number, so that the insert member, in a position where its different zones are situated at the corresponding zones of said opening, may be inserted into the recess in a direction perpendicularly to the envelope faces, and may then be locked against withdrawal in this direction by a straight-lined displacement corresponding to the length (j) of one zone.

## Patentansprüche

1. Anordnung zum Befestigen eines blattförmigen Gliedes, wie z.B. eines Rotorblattes (1) welches von zwei Mantelflächen (1d, 1e) und zwei Endflächen (1f) begrenzt ist, in einer Durchflussvorrichtung mittels zumindest eines Trägergliedes (9), wobei das blattformige Glied zumindest in einem Teil seines Profils ein Gebiet von nicht vernachlässlichbarer Dicke (t) aufweist, **dadurch** **gekennzeichnet,** dass im Blattglied an einer Anschluss-Stelle innerhalb des genannten Gebietes eine Aussparung (2, 20, 21, 22) vorgesehen ist die von zwei Seitenwänden (2a, 2b), welche entlang zweier Endkanten (2′, 2˝, 2′a, 20′) zumindest eine der Mantelflächen schneiden, und von zumindest einer Endfläche (2c, 2cc), welche die beiden Seitenwände miteinander verbindet, begrenzt ist, wobei zumindest eine der genannten Seitenwände hinterstochen ist indem sie im Abstand von ihrer Endkante ein Gebiet (f) aufweist welches weiter von der gegenüberstehenden Seitenwand liegt als eine gerade Bezugslinie (g, g′) welche die genannte Endkante berührt, und dass ein Schwenk- oder Einsatzglied (4, 40-44) vorgesehen ist, welches von zwei Seitenflächen (4a, 4b), zumindest einer äusseren Begrenzungsfläche, und zwei Endflächen (4c) begrenzt ist, wobei dieses Enisatzstück in die genannte Aussparung bis zu einer Endlage einführbar ist in der es gegen Entnahme aus der Aussparung von einer Kraft gesperrt ist, die senkrecht zu den genannten Mantelflächen wirkt zufolge eines von der genannten Hinterschneidung zustandegekommenen formschlüssigen Eingriffes bezüglich der gegenüberstehenden Seitenfläche des Einsatzgliedes, gegebenen Falls mittels eines eingeführten Sperrelementes (30, 31) welches im Profil eine Form hat die formschlüssigen Eingriff mit der anliegenten Seitenwand und Seitenfläche herbeiführt, wobei die äussere Begrenzungsfläche oder -flächen des Einsatzgliedes derart gestaltet und gelegen sind, dass sie in der Endlage des Einsatzgliedes zumindest annähernd eine Fortsetzung der benachbarten Mantelfäche bilden, und dass das Trägerglied an das Ensatzglied anschliessbar ist.

2. Anordnung nach Anspruch 1, **dadurch** **gekennzeichnet**, dass die Seitenwände der Aussparung beide Mantelfächen schneiden, und dass die genannte Bezugslinie (g) eine gerade Verbindungslinie zwischen den Endkanten der betreffenden Seitenwand an den beiden Mantelflächen ist.

3. Anordnung nach Anspruch 1, **dadurch** **gekennzeichnet**, dass die grösste Tiefe der Aussparung kleiner als die Dicke des Blattgliedes im betreffenden Gebiet ist, so dass die Aussparung (44) bloss eine Mantelfläche entlang zweier Endkanten (2′, 2′a) schneidet, und dass die genannte Bezugslinie eine Normale ist die an der betreffenden Endkante eine Verbindungslinie (z) zur anderen Endkante schneidet.

4. Anordnung nach einem oder mehreren der vorhergehenden Ansprüche, **dadurch** **gekennzeichnet**, dass die Seitenwände und die Seitenflächen einander entsprechende zylindrische Form aufweisen, und dass eine der Seitenwände konkav, und die in der Endlage des Einsatzstückes daran anliegende Seitenfläche konvex ist.

5. Anordnung nach einem oder mehreren der vorhergehenden Ansprüche, **dadurch** **gekennzeichnet**, dass zumindest eine der Endflächen zumindest teilweise konkav sphärisch gestaltet ist, und dass der gegebenen Falls vorhandene restliche Teil konkav zylindrische Form mit dem gleichen Radius aufweist.

6. Anordnung nach einem oder mehreren der vorhergehenden Ansprüche, **dadurch gekennzeichnet**, dass das Einsatzglied zwei Hälften (4′, 4˝) aufweist welche mittels eines Schwenkbolzens mit Abstand (M) miteinander verbunden sind, and dass das Trägerglied im der genannten Abstandsstrecke schwenkbar an den Schwenkbolzen angeschlossen ist.

7. Anordnung nach einem oder mehreren der vorhergehenden Ansprüche, **dadurch gekennzeichnet**, dass der Schwenkbolzen mittels in den inneren Flächen (4f) der beiden Hälften vorgesehenen Dichtungen in den beiden Hälften abgedichtet ist.

8. Anordnung nach einem oder mehreren der vorhergehenden Ansprüche, **dadurch gekennzeichnet**, dass der kleinste gegenseitige Abstand (c′) der Seitenwände der Aussparung grösser als der gegenseitige Abstand (e) der äusseren Flächen des Einsatzgliedes ist, so dass das Einsatzglied in die Aussparung in Richtung senkrecht zu den genannten Mantelfächen eingeführt, und danach durch Drehung um etwa 90° in seine Endlage gebracht werden kann.

9. Anordnung nach einem oder mehreren der vorhergehenden Ansprüche, **dadurch gekennzeichnet**, dass das Einsatzglied in seiner Endlage mittels zumindest einer Sperrplatte (13) gesperrt ist, die an zumindest einem Ende des Einsatzgliedes vorgesehen und in einem Schlitz (17) in der Endfläche des Einsatzfliedes eingeführt ist und die Endteile (13a) aufweist, welche in Richtung der Mantelflächen abgebogen, und vorzugsweise in die Mantelflächen eingelassen sind.

10. Anordnung nach Anspruch 1, **dadurch gekennzeichnet,** dass das Einsatzglied eine Vielzahl schmalerer Zonen (40B) vorbestimmter Länge und mit graden Seitenflächen aufweist, welche mit breiteren Zonen (40A) alternieren, die Seitenflächen aufweisen, deren Peripherie sich ausserhalb der Peripherie der geraden Seitenflächen erstreckt, und dass die Aussparung (20) in ihrem ganzen Umfang ein Profil aufweist welches die Unterbringung der breiteren Zonen zulässt, wobei die von den Endkanten (20′) der Aussparung begrenzte Öffnung an zumindest einer der Mantelfächen abwechselnd breitere und schmalere Zonen (20A, 20B) aufweist von denen die breiteren Zonen den Durchgang der breiteren Zonen des Einsatzgliedes, und die schmaleren Zonen bloss den Durchgang der schmaleren Zonen des Einsatzgliedes zulassen und in entsprechender Anzahl vorgesehen sind, so dass das Einsatzglied in einer Lage wo sich seine verschiedenen Zonen neben den entsprechenden Zonen der genannten Öffnung befinden, in Richtung senkrecht zur Mantelfäche in die Aussparung eingeführt werden, und sodann durch geradliniges, der Länge (j) einer Zone entsprechendes Verschieben gegen Entnahme in dieser Richtung gesperrt werden kann.

## Revendications

1. Dispositif destiné à être fixé dans une machine à écoulement de fluide par au moins un élément de support (9), d'un élément en forme de pale tel qu'une pale de rotor (1), qui est délimité par deux faces d'enveloppe (1d, 1e) et deux faces d'extrémité (1f), et qui comporte, .sur au moins une partie de son profil, une zone (1c) ayant une épaisseur non négligeable (t), carartérisé en ce que, dans l'élément formant pale, en un point de fixation et à l'intérieur de ladite zone, est prévu un évidement (2, 20, 21, 22) qui est délimité par deux parois latérales (2a, 2b) qui coupent, le long de deux bords d'extrémité (2′, 2˝, 2′a, 20′), au moins l'une des deux faces d'enveloppe et par au moins une face d'extrémité (2c, 2cc), qui relie entre elles les deux parois latérales, au moins l'une desdites parois latérales étant découpée, c'est-à-dire qu'elle présente, espacée de son bord d'extrémité, une zone (f) qui est située plus loin de la paroi latérale opposée qu'une droite de référence (g, g′) passant par ledit bord d'extrémité, et en ce qu'un pivot ou insert (4, 40-44) est prévu, celui-ci étant délimité par deux faces latérales (4a, 4b), par au moins une face de délimitation extérieure (4d, 4e) et par deux faces d'extrémité (4c), lequel insert peut être inséré dans l'évidement jusqu'à une position finale dans laquelle il est verrouillé et ne peut être retiré de l'évidement par une force agissant perpendiculairement auxdites faces d'enveloppe, du fait d'un effet d'emboîtement de formes complémentaires provoqué par ladite découpe par rapport à la face latérale opposée de l'insert, et lorsque cela est approprié, par l'intermédiaire d'un élément de verrouillage inséré (30, 31) ayant un profil qui établit un emboîtement à formes adaptées avec la paroi latérale adjacente et la face latérale, la face ou les faces de délimitation extérieures de l'insert ayant une forme telle et. étant placées de telle manière que , dans la position finale de l'insert, elles forment au moins approximativement un prolongement de la face d'enveloppe qui l'entoure et que l'élément de support peut être relié à l'insert.

2. Dispositif selon la revendication 1, caractérisé en ce que les parois latérales de l'évidement coupent les deux faces d'enveloppe et en ce que ladite droite de référence (g) est une droite de liaison entre les bords d'extrémité de la paroi latérale respective sur les deux faces d'enveloppe.

3. Dispositif selon la revendication 1, caractérisé en ce que la profondeur maximale de l'évidement est inférieure à l'épaisseur de l'élément formant pale dans la zone respective, de telle sorte que l'évidement (44) ne coupe qu'une face d'enveloppe le long de deux bords d'extrémité (2′, 2′a) et que ladite droite de référence est une perpendiculaire qui, sur le bord d'extrémité respectif, coupe une droite de liaison (z) avec l'autre bord d'extrémité.

4. Dispositif selon l'une ou plusieurs des revendications précédentes, caractérisé en ce que les parois latérales et les faces latérales ont des formes cylindriques se correspondant mutuellement et en ce que l'une des parois latérales est concave, et la face latérale qui lui est adjacente, dans la position finale de l'insert, est convexe.

5. Dispositif selon l'une ou plusieurs des revendications précédentes, carartérisé en ce que la ou les surface(s) d'extrémité a (ont) au moins en partie une forme concave sphérique et en ce que la partie éventuellement restante présente une forme cylindrique concave de même rayon.

6. Dispositif selon l'une ou plusieurs des revendications précédentes, caractérisé en ce que l'insert comprend deux moitiés (4′, 4˝) qui sont reliées entre elles de façon espacée (M) au moyen d'un axe de pivotement, et en ce que l'élément de support est relié de façon pivotante à l'axe de pivotement dans ledit espace.

7. Dispositif selon l'une ou plusieurs des revendications précédentes, caractérisé en ce que l'axe de pivotement est isolé de façon étanche dans les deux moitiés au moyen de joints d'étanchéité (11) se trouvant sur les faces intérieures (4f) des deux moitiés.

8. Dispositif selon l'une ou plusieurs des revendications précédentes, caractérisé en ce que la distance mutuelle la plus faible (c′) entre les parois latérales de l'évidement, est supérieure à la distance mutuelle (e) entre les faces extérieures de l'insert, de telle manière que l'insert puisse être inséré dans l'évidement dans une direction formant des angles droits par rapport auxdites faces d'enveloppe, puis qu'il puisse être amené à sa position finale par une rotation d'environ 90°.

9. Dispositif selon l'une ou plusieurs des revendications précédentes, caractérisé en ce que l'insert est verrouillé dans sa position finale au moyen d'au moins une plaque de verrouillage (13) disposée à au moins l'une de ses extrémités, et en ce que ladite plaque de verrouillage est insérée dans une fente (17) ménagée dans la face d'extrémité de l'insert et possède des parties d'extrémité (13a) qui sont défléchies dans la direction des faces de l'enveloppe, et qui pénètrent de préférence dans les faces de l'enveloppe.

10. Dispositif selon la revendication 1, caractérisé en ce que l'insert présente une pluralité de zones étroites (40B), de longueur prédéterminée et ayant des faces latérales rectilignes, lesquelles zones alternent avec des zones plus larges (40A), ayant des faces latérales qui ont une périphérie dépassant de la périphérie des faces latérales rectilignes, et en ce que l'évidement (20), sur toute son étendue, présente un profil permettant de recevoir les zones larges, l'ouverture limitée par les bords d'extrémité (20′) de l'évidement présentant sur au moins l'une des surfaces d'enveloppe, des zones larges et étroites alternées (20A, 20B), parmi lesquelles les zones larges offrent un passage vers les zones larges de l'insert et son prévues en même nombre que ces dernières, alors que les zones étroites n'offrent qu'un passage vers les zones étroites de l'évidement et sont prévues en nombre correspondant, de manière à ce que l'insert, lorsqu'il est dans une position où ces différentes zones sont situées en vis-à-vis des zones correspondantes de ladite ouverture, puisse être inséré dans l'évidement dans une direction perpendiculaire aux faces de l'enveloppe, et puisse ensuite être verrouillé afin de ne pouvoir être retiré dans cette direction par un déplacement rectiligne correspondant à la longueur (j) d'une zone.
